# EUROPEAN PATENT SPECIFICATION

(11) **EP 1 665 719 B1**
(45) Date of publication and mention of the grant of the patent: **13.06.2012**
(21) Application number: 03817924.8
(22) Date of filing: 18.07.2003
(51) Int. Cl.: H04L 29/06

(54) **CONTEXT PROPAGATION IN DATA NETWORK**
KONTEXT-AUSBREITUNG IN EINEM DATEN-NETZWERK
PROPAGATION DE CONTEXTE DANS UN RESEAU DE DONNEES

(43) Date of publication of application: 07.06.2006
(73) Proprietor: NTT DoCoMo, Inc., Tokyo 100-6150 (JP)
(72) Inventor: KELLERER, Wolfgang, 82256 Fürstenfeldbruck (DE); HIRSCHFELD, Robert, 98693 Ilmenau (DE)
(74) Representative: HOFFMANN EITLE
(86) International application number: PCT/EP2003/007879
(87) International publication number: WO 2005/015869

(56) References cited:
- BELLAVISTA P ET AL: "Active middleware for Internet Video on Demand: the QoS-aware routing solution in ubiQoS" MICROPROCESSORS AND MICROSYSTEMS, IPC BUSINESS PRESS LTD. LONDON, GB, vol. 27, no. 2, 15 March 2003 (2003-03-15), pages 73-83, XP004413105 ISSN: 0141-9331
- GRIBBLE S D ET AL: "The Ninja architecture for robust Internet-scale systems and services" COMPUTER NETWORKS, ELSEVIER SCIENCE PUBLISHERS B.V., AMSTERDAM, NL, vol. 35, no. 4, March 2001 (2001-03), pages 473-497, XP004304860 ISSN: 1389-1286

## Description

### Field of the invention

The present invention relates to data networks, and particularly to the transfer of information between elements of that network.

### Prior art

Several application specific solutions for the signaling of application relevant parameters exist, such as RTCP, that are limited to information available at the client or server. Service discovery methods such as JINI are also known that may address the exchange of a service description.

Jini is a network architecture intended for use in networks of large scale, high rate of change and complexity of interaction. Jini technology provides an infrastructure for delivering services in a network and for creating spontaneous interactions between clients that use these services regardless of their hardware or software implementations. Jini makes use of techniques such as leasing, discovery and the movement of objects over a network. Jini works by using objects that move around the network. A way for clients and services to find each other on the network and to work together is specified. Service providers supply clients with portable Java technology-based objects ("Java objects") that give the client access to the service. This network interaction can use any type of networking technology, since only the Java object provided by the service is visible to the client.

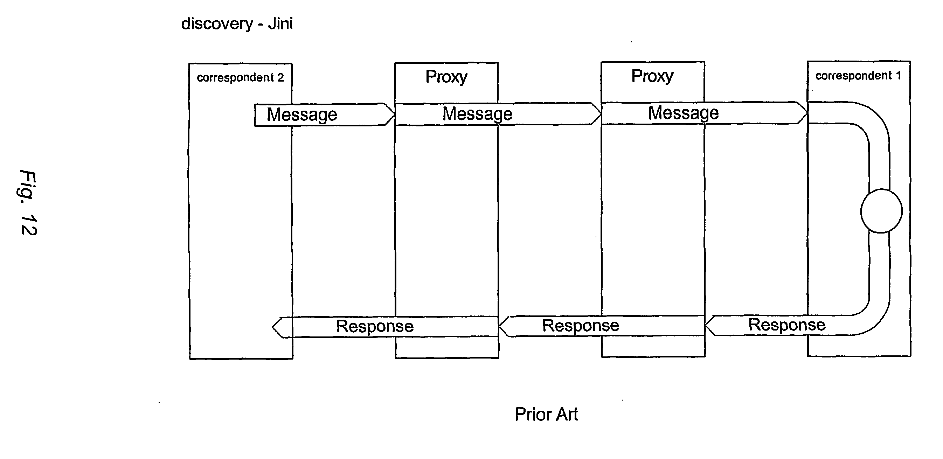

When a service joins a network of Jini technology-enabled services and/or devices, it advertises itself by publishing a Java object that implements the service API. This object's implementation can work in any way the service chooses. The client finds services by looking for an object that supports the API. When it gets the service's published object, it will download any code it needs in order to talk to the service, thereby learning how to talk to the particular service implementation via the API. The programmer who implements the service chooses how to translate an API request into bits on the wire using RMI, CORBA, XML, or a private protocol. Figure 12 shows aspects of the Jini system, whereby a message is passed form a server to a client via a number of proxies, and a response is returned to the server, as discussed above.

The RTP (Real Time Transport Protocol) control protocol (RTCP) relies on the periodic transmission of control packets to all network entities in a network, using the same distribution mechanism for the data traffic. The underlying protocol multiplexes the data and control packets. The primary function is to provide feedback on the quality of the data distribution. This is essential to the RTP's role as a transport protocol and is related to the flow and congestion control functions of other transport protocols. The feedback can also be used for control of adaptive encoding. Sending reception feedback reports to all participants makes it possible to determine whether problems detected are local or global. With a distribution mechanism like IP multicast, it is also possible for an entity such as a network service provider that is not otherwise involved in the session to receive the feedback information so as to act as a third-party monitor to diagnose network problems. All participants send RTCP packets, and the rate must be therefore be controlled in order for RTP to scale up to a large number of participants. Since each participant sends control packets to all others, each can independently observe the number of participants. Minimal session control information, for example participant identification to be displayed in the user interface can also be transmitted. This is most useful in "loosely controlled" sessions where participants enter and leave without membership control or parameter negotiation. RTCP serves as a convenient channel to reach all the participants, but does not support all control communication requirements of an application.

BELLAVISTA P ET AL: "Active middleware for Internet Video on Demand: the QoS-aware routing solution in ubiQoS" MICROPROCESSORS AND MICROSYSTEMS, IPC BUSINESS PRESS LTD. LONDON, GB, vol. 27, no. 2, 15 March 2003 (2003-03-15), pages 73-83, XP004413105 ISSN: 0141-9331 describes video-on-demand services provided using a distributed infrastructure with mobile agents along a network path between a client and a server. The mobile agents may be activated for QoS enabled service provision by traversing data flows and reserving intermediate network resources. QoS management operations are executed in two phases, wherein a first phase precedes a real service flow and is used to negotiate the initial suitable QoS level. This first phase determines an optimum engagement of resources on the basis of user preferences. The mobile agents can dynamically install along the path to negotiate the QoS level that any path segment has to maintain and decide a required multimedia scaling operation. In the second phase the initially negotiated QoS level is adapted to modifications in available resources.

GRIBBLE S D ET AL: "The Ninja architecture for robust Internet-scale systems and services" COMPUTER NETWORKS, ELSEVIER SCIENCE PUBLISHERS B.V., AMSTERDAM, NL, vol. 35, no. 4, March 2001 (2001-03), pages 473-497, XP004304860 ISSN: 1389-1286 describes an architecture for Internet systems and services for providing services that aggregate and transform sources of information, for matching capabilities of devices used for obtaining the service. Active proxies are provided between devices and services for transforming data types to adapt protocols or to adapt values of content of a service.

### Summary of the Invention

It is a problem underlying the invention to improve the acquisition and distribution of context information on elements of a network and to improve the control of an application.

This problem of the invention is solved by a method with the features of claim 1 and by a network entity with the features of claim 14. Preferred embodiments of the present invention are defined in the appended dependent claims.

### Brief description of the drawings

For a better understanding of the invention, and to show how the same may be carried into effect, reference will now be made, by way of example, to the accompanying drawings, in which:
- Figure 1: shows an arrangement for acquiring context information in a network according to a first embodiment of the present invention;
- Figure 2: is a flow chart of the steps taken by the intermediate network entity according to the first embodiment of the present invention as described with respect to figure 1.
- Figure 3: shows an arrangement for acquiring context information in a network according to a second embodiment of the present invention;
- Figure 4: is a flow chart of the steps taken by the intermediate network entity according to the second embodiment of the present invention as described with respect to figure 3.
- Figure 5: shows an arrangement for acquiring context
information in a network according to a third embodiment of the present invention; Figure 6 is a flow chart of the steps taken by the intermediate network entity according to the third embodiment of the present invention as described with respect to figure 5.
Figure 7 shows an arrangement for acquiring context information in a network according to a fourth embodiment of the present invention;
Figure 8 shows an arrangement for acquiring context information in a network according to a fifth embodiment of the present invention;
Figure 9 shows an arrangement for acquiring context information in a network according to a sixth embodiment of the present invention; and
Figure 10 shows an arrangement for acquiring context information in a network according to a seventh embodiment of the present invention;
Figure 11 shows an arrangement for acquiring context information in a network according to an eighth embodiment of the present invention; and
Figure 12 shows aspects of the Jini system, whereby a message is passed form a server to a client via a number of proxies, and a response is returned to the server, as discussed above.

### Detailed description of the preferred embodiments

Embodiments of the present invention relate to methods and systems that allow for the collection of context information available at multiple locations in a communications network along the path between a client and a server.

Context information includes anything that can be observed or computed. Examples include user-related information such as user profiles, e.g. including a user ID, user authorizations, user preferences, user behavior, etc. Further examples are hardware-related information such as device profiles or network-related information such as protocol capabilities or network status information. Information about other computational resources such as server or service profiles or information about non-computational phenomena such as spatial coordinates or time may also be included. Such information can be provided directly by clients or indirectly through supporting infrastructure. Context information may in particular include information relation to the operating condition at a network entity

It is desirable to obtain relevant context information possibly depending on other information such as the application type, user preferences, or the availability of context information at all. The trade-off between the amount of context information acquired and the effort to acquire it is selected on the basis of the relevance of the acquired information.

The acceptance of services may come to depend on their ability to take additional contextual information into consideration. Here, one of the challenges is the selection, accumulation and propagation of relevant context information.

Context awareness is consideration of and reaction to context information, i.e. environmental states and properties of applications. Context information may be collected and provided by any network entity, such as clients, servers, other network entities or the network infrastructure or service applications.

According to exemplary embodiments of the present invention there is provided a system in which a client requests a service that is provided by a server, and in which client and server interact via message exchange within a communications network. The messages that are exchanged may traverse several system components such as gateways of a home network, base stations or access points of a wireless access network, gateways into and out of the core network, or routers within a core network or the public Internet. These system components may be referred to as intermediate network entities, or as proxies.

The service provided by the server is preferably, but not necessarily, context-aware, meaning that it could benefit from or even require the availability of supplementary contextual information.

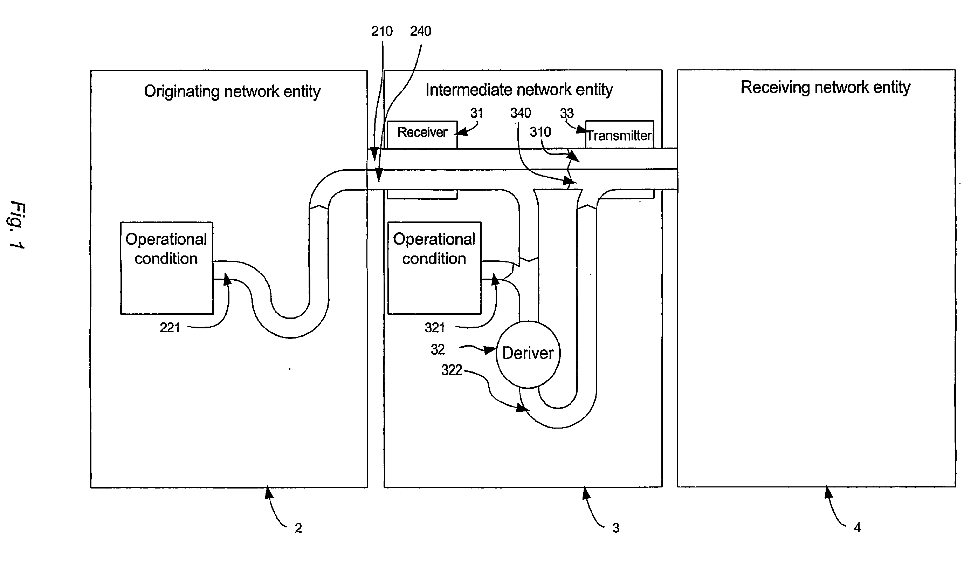

Figure 1 shows an arrangement for acquiring context information in a network according to a first embodiment of the present invention.

According to the first embodiment of the present invention as shown in Figure 1, there is provided an originating node 2, an intermediate network entity 3, and a receiving network entity 4, all of which network entities are connected via a communication network. According to the present invention, the intermediate network entity of this arrangement is adapted to carry out a method of acquiring context information relating to the communication network. As shown in Figure 1, the intermediate network entity 3 receives originating context information 240 from an originating network entity 2, in association with a message 210. This originating context information 240 contains information specifying an operational condition at the originating network entity 221. Information relating to an operational condition at the intermediate network entity 321 is also available at the intermediate network entity 3. The intermediate context information 322 provided by the originating network entity 2 is used to derive intermediate context information 322, in combination with the information relating to an operational condition at the intermediate network entity 321, at a derivation step 32. This intermediate context information 322 is then transmitted to the receiving network entity 4, together with a message 310.

Although this and other embodiments include a single intermediate network entity, the present invention applies equally to arrangements having any number of intermediate network entities. Furthermore, some of these further network entities may not be context aware, merely fulfilling the role of relays between the originating network entity, intermediate network entity and receiving network entity.

Context information could be carried either in-band or out-of-band. Furthermore, in the context of a message, context can be added to the request, the response, or both.

The communication network, and thus the link between the network entities may comprise wired, wireless, optical or other communication technologies, or any combination thereof. The network may me a cellular network, using GSM for example. Communications over these network links may take place by ATM, GPRS, IP switching protocols, ISDN, PPB, TCIP, UNTS, etc., or according to any other communication protocol, or according to any combination of these technologies, as will readily occur to the skilled person. The communication network may be an ad hoc network, to which network entities are added and removed in an unpredictable manner, and where context information may enable network entity joining the network to access its facilities, and to alert other network entities when a network entity leaves the network.

The context information of the present invention may relate to any aspect of the network environment, for example details of hardware, firmware, software, status, time, traffic, processing load, memory load, or any other factor as necessary. These values may be specified at the network entity concerned, obtained from another network entity or network element, or derived from other data available at the network element. The message 210 may comprise any type of data transmission supported by the network, and may have a length of zero. The association between the message and the context information may comprise an incorporation of all or part of one in the other, or a reference by one to the other, or may relate to a shared transmission time, transmission path, use of network resources etc.

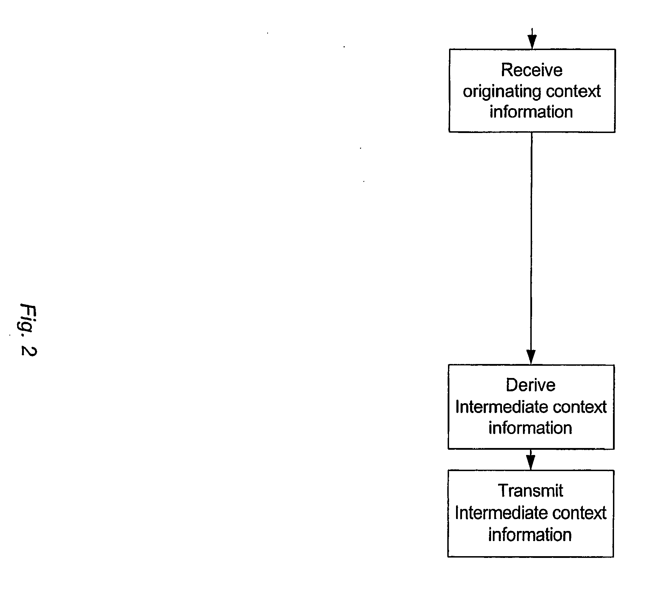

Figure 2 is a flow chart of the steps taken by the intermediate network entity according to the first embodiment of the present invention as described with respect to figure 1. As shown in this figure, a method of acquiring context information at an intermediate network entity 3, includes the step s1 of receiving originating context information 240 from an originating network entity 2, the originating context information 240 being associated with a message 210 from the originating network entity 2 and specifying an operational condition 221 at the originating network entity 2. According to this method, a step s5 of deriving intermediate context information 322 at the intermediate network entity 3 based on the originating context information 240 received from the originating network entity 2 and an operational condition 321 at the intermediate network entity 3 is then carried out. Finally, a step s6 of transmitting the intermediate context information 322 in association with a message 310 to a receiving network entity 4 is implemented.

Correspondingly, the present invention further relates to a network entity for use in a communication network. This network entity comprises a first receiver adapted to receive originating context information specifying an operational condition at an originating network entity and a message from the originating network entity, the originating context information and the message being associated with one another. The network entity further comprises a processor, adapted to derive intermediate context information at the intermediate network entity based on the originating context information received from the originating network entity by said first receiver and an operational condition at the intermediate network entity. The network entity also comprises a transmitter, adapted to transmit the intermediate context information in association with a message to a receiving network entity.

The functional elements of the network entity of the present invention, such as the transmitter, processor, and receiver, may each take the form of dedicated hardware, for example as a microchip or a plurality thereof, or consist of firmware loaded into for example an EPROM, or further consist of a set of software routines stored in a storage device such as Random Access Memory, a hard drive, a CDROM etc. The compiler, processor and operating unit may further comprise any combination of the above forms.

In the present application, the terms receiver, transmitter and processor may relate to arrangements configured to perform solely the tasks specifically attributed to them, and not necessarily be interpreted as relating to devices known in the art which may commonly be referred to in similar terms. The skilled person will however recognise that certain of these functions can be carried using known approaches, for example in the form of conventional hardware, when programmed, initialised or otherwise adapted so as to put the present invention into effect.

The process of deriving the intermediate context information 322 may include modification of the originating context information 240, based on the operational condition at the intermediate entity. Correspondingly the processor of the network entity of the present invention may be adapted to derive the intermediate context information by modifying the originating context information based on the operational condition at the intermediate network entity.

This modification process may include the deletion of some or all of the originating context information, the transformation of all or part of the originating context information, or addition to the original context information, or any combination of these processes. The transformation of the originating context information may involve changing individual values within the context information, the changing of the structure of the information, or the reordering thereof.

Correspondingly, the processor of the Network entity of the present invention may be adapted to derive the intermediate context information by deleting at least a part of the originating context information, transforming at least a part of the originating context information, or adding context information, or any combination of these.

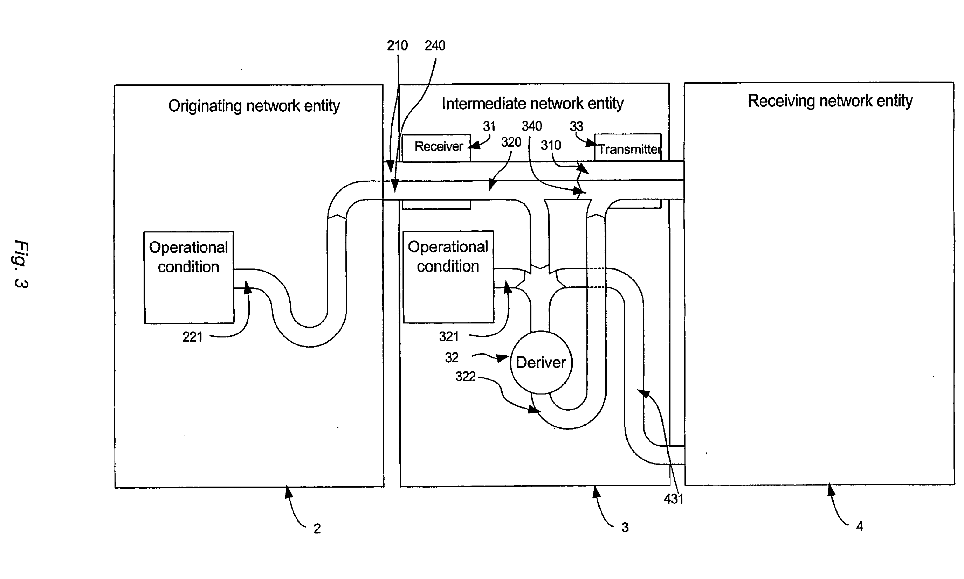

Figure 3 shows an arrangement for acquiring context information in a network according to a second embodiment of the present invention. Figure 3 comprises all features described with regard to Figure 1. Additionally, according to this method according to the present invention, feedback information 431 is received from the receiving network entity. This information is used in combination with the intermediate operational condition 321, and the originating context information 240, in the derivation of the intermediate context information 322. By this means, the intermediate network entity is able to derive intermediate context information from network entities in both the upstream and down stream direction. Correspondingly, the intermediate network entity of the present invention may further comprise a second receiver adapted to receive feedback information from the receiving network entity. The processor may furthermore be adapted to derive the intermediate context information based thereon.

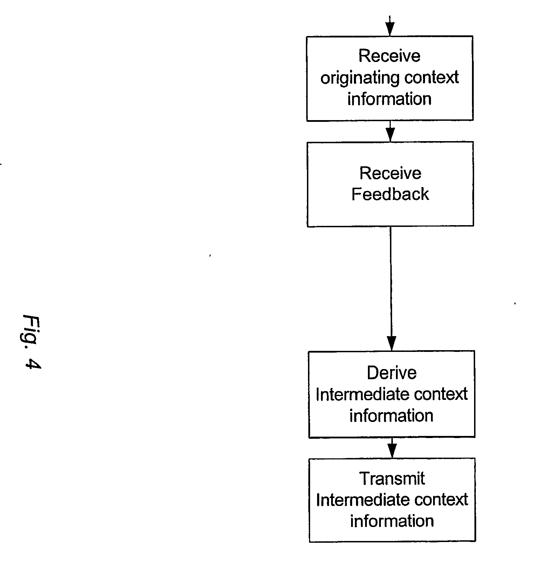

Figure 4 is a flow chart of the steps taken by the intermediate network entity according to the second embodiment of the present invention as described with respect to figure 3. As shown in this figure, the method comprises the further step s2 of receiving feedback information 431 from the receiving network entity, as described above.

Although context information can be sent associated with a message as discussed above, this is not always necessary, or indeed desirable. It may be preferable to send context information on its own, for example to update context information stored at other network entities. In other words, an intermediate network entity may receive further originating context information, that is, at a time after receiving context information associated with a message, and derive the intermediate context information based thereon. Correspondingly, the intermediate network entity of the present invention may further comprise a third receiver adapted to receive further originating context information. The processor of the network entity may further be adapted to derive the intermediate context information based on this further context information.

This process may be used to update context information available along a transmission path. If relevant operational conditions at one of the network entities change, a corresponding context information element can be propagated along the transmission path and each network entity can appropriately update its context information on the basis of the context information element and the operational conditions at the network entity, e.g. by exchanging a piece of context information, modifying the context information etc., as noted above.

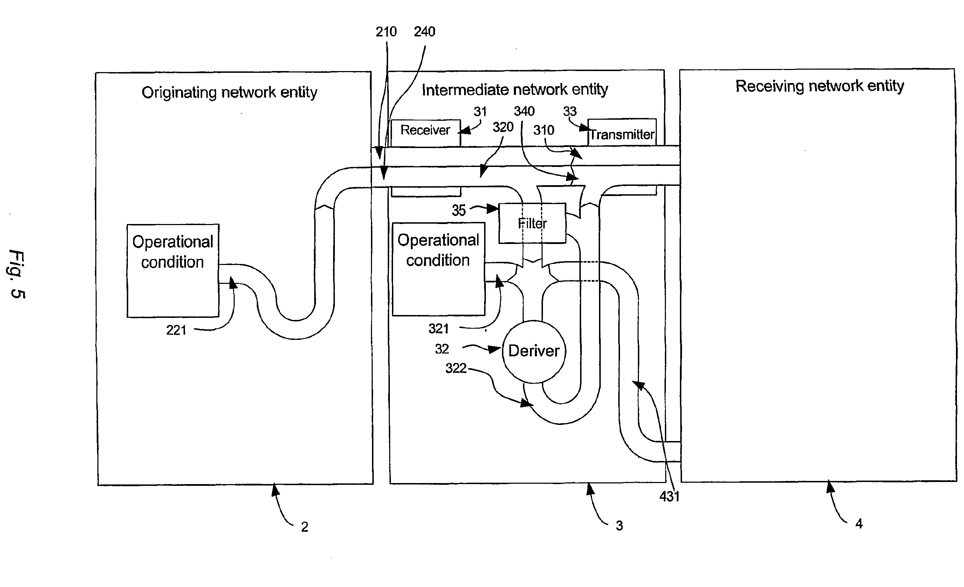

Figure 5 shows an arrangement for acquiring context information in a network according to a third embodiment of the present invention. Figure 5 corresponds substantially to Figure 3, and provides a further process 35, of filtering the originating context information 240 received from the originating network entity 2. This filtering process may involve a set of selection rules based on operating conditions, for example at the originating network entity, the intermediate network entity or the receiving network entity, or for that matter any other network entity in the same network system, or any combination of these sets of operational conditions. These rules are then used to filter the context information from the originating network entity.

Since context information can be anything observable or computable, the actual amount or information of relevance in the context of a service is usually minimal and with that might not justify the additional effort of collecting, storing, and propagating that information. To minimize the amount of information to be handled, the selection mechanism will be provided with profile information about or from the client, server, and proxy elements if available.

To further adapt the context selection, a server can provide feedback information detailing its interest in already received or to be provided in the further.

Based on their knowledge, proxies may also modify the contextual information that is received via other proxies in a way that they delete irrelevant information, add more relevant information, or transform available date into more relevant facts.

The network entity of the present invention may therefore correspondingly further comprise selection means adapted to define selection rules based on at least one of the operational conditions at the originating network entity, which the intermediate network entity and the receiving network entity may implement, and to filter the originating context information based on the selection rules. This selection means may preferably be integrated as a function of the processor.

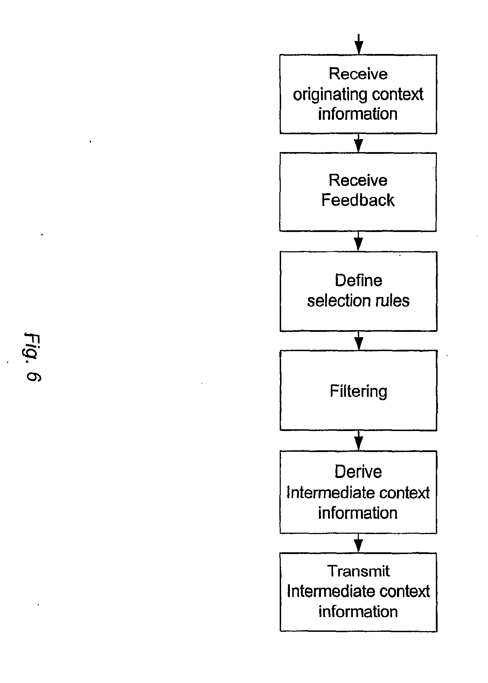

Figure 6 is a flow chart of the steps taken by the intermediate network entity according to the third embodiment of the present invention as described with respect to figure 5. As shown in this figure, the method comprises the further step s3 of defining selection rules based on at least one of the operational conditions at the originating network entity, and a step s4 of filtering the originating context information received at step s1 based on these selection rules.

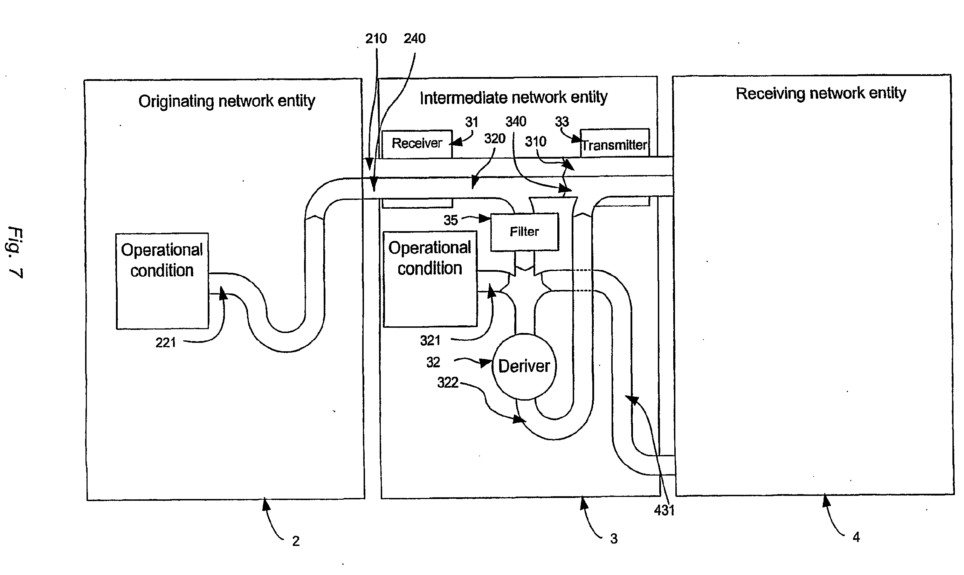

Figure 7 shows an arrangement for acquiring context information in a network according to a fourth embodiment of the present invention.

As discussed above, an operational condition may specify static or dynamic information, such as a static profile, or a dynamic state respectively. Static profile information may relate for example to the hardware of which a particular network entity is constructed, and its configuration, both in software, firmware or hard ware. This information may also relate to users associated with the network entity, and other, ancillary hardware connected thereto. It may relate to functionality available at the network entity, for example the presence of a printer, camera, or other device. The information may relate to static features of the network entities connection to the network, such as its maximum data capacity.

On the other hand, dynamic state information may relate to the activities of users connected to the network entity, the activity and processes running on the network entity, and data traffic passing through the network entity. Many other types of data, of both a dynamic and static nature will readily occur to the skilled person.

Furthermore, the operational condition may be either pre-specified, obtained from a device in communication with a network entity, or derived from information available at a network entity. Examples of a pre-specified operational condition may relate to the amount of memory available for a given purpose, or access rights for a particular process. Information obtained from a device in communication with a network entity may relate for example to the status of a device, such as a printer, wherein the information obtained may relate for example to the number of jobs pending in the printer queue, or the level of the toner reservoir.

Finally, derived information available at a network entity may comprise statistical information relating to data traffic through the network entity, such as the quantity of traffic, the granularity, and type of data. Derived information may also relate to the status of other network entities, and other paths through the network, for example information relating to load balancing, and error avoidance. Clearly, a given piece of information may fall into any combination of static and dynamic on the one hand, and pre-specified, obtained from a device, and derived on the other, so that a table of different classes of operational condition may be envisaged.

Considered in this manner, there are therefore six classes of operational condition information. Firstly, Derived Dynamic Information such as the instantaneous number of users on the network as derived from traffic data, prespecified Dynamic Information such as varying service charges for different times of the day and obtained Dynamic Information such as the quantity of ink remaining in a remote printer. Secondly, Derived Static Information which may consist for example of details of services offered by a particular network entity derived from its responses to past requests, prespecified static Information such as a local node's IP address, and obtained static Information may be a remote node's IP address.

The operational condition of the present invention may relate to any of these combinations, and indeed a group of such combinations. Furthermore, other classes of information which do not necessarily comfortably fall into any of the six categories may further be envisaged, as falling within the scope of the present invention.

Correspondingly, the network entity of the present invention may further comprise one of, a memory adapted to store a predefined operational condition, a communicator adapted to obtain an operational condition from a device in communication with a network entity, and further processor means adapted to derive an operational condition from information available at a network entity, or any combination of these elements.

The memory 3 may take the form of any conventional data storage device, such as a Random Access Memory, a hard drive, etc. Where the compiler 201, processor 202 and operating unit 203 are housed in a computer system, such as a desktop personal computer, the memory may also be housed in that computer system.

Alternatively, the memory may be provided at some other location, for example in a separate Server computer, or in a stand-alone data storage device such as a virtual jukebox. Where this is the case, it will be necessary to provide a means allowing data transfer at least from the operating unit to the memory. This may comprise a Local Area Network, or some other Network arrangement such as the World Wide Web.

As discussed above, the originating content information may be associated with the message from the originating network entity. According to the present invention, this association may mean that the originating content information actually constitutes part of the message from the originating network entity. This may be the case for example where the originating context information is not in fact generated by the originating network entity, but merely forwarded by the originating network entity from a server application associated therewith. The originating network entity may thus be considered to be content agnostic, that is, the service application or network entity is not able to handle context information, e.g. a legacy application or system component. Nevertheless the remaining content aware components may employ context information. Context-aware components, services, or applications make use of additional information. Such information can be provided directly by clients or indirectly through supporting infrastructure. While in the former case, clients need to be made context-aware themselves, the latter case allows clients to be context agnostic.

Context agnostic clients allow the client-independent introduction of context-aware services, possibly at a later point in time, after the initial service deployment, allowing for system evolution.

It may be desirable in the present invention to cache certain information, such as intermediate context information, selection rules, originating context information, receiving context information and feedback information as discussed above, at the intermediate network entity. By this means, context information about the network can be maintained at the intermediate network entity, without being constantly refreshed, thereby reducing overall network traffic, but easily be updated in the case that the information changes. This caching of information is thus particularly appropriate for data that is subject to change over time. Operating conditions at the originating network entity, operational conditions at the intermediate network entity and operational conditions at the receiving network entity are all suitable sets of data to be cached.

To avoid unnecessary computation and communication, profiles, selection strategies and relevant context information are cached to be available for further processing beyond the initiating message exchanged between client and server. To avoid stale caches, there are cleaning mechanisms such as leases in place to keep information current.

The network entity of the present invention may correspondingly further comprise an intermediate context information cache adapted to store said intermediate context information. The network entity of the present invention may correspondingly further comprise a selection rules cache adapted to store said selection rules. The network entity of the present invention may correspondingly further comprise an originating context information cache adapted to store the originating context information received by said first receiver. The network entity of the present invention may correspondingly further comprise a received context information cache to store said context information received by the second receiver. The network entity of the present invention may correspondingly further comprise a feedback information cache to store operational conditions at the originating network entity, operational conditions at the intermediate network entity and operational conditions at the receiving network entity.

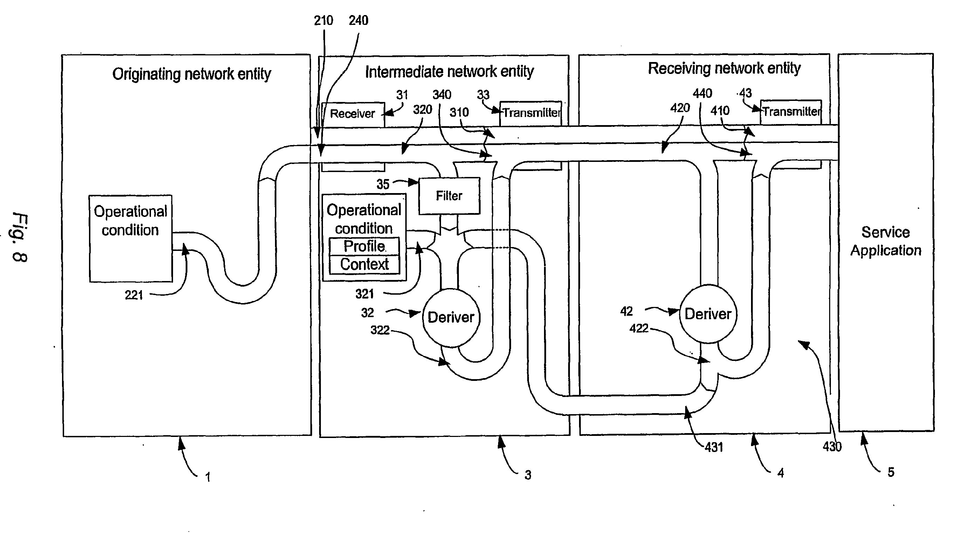

Figure 8 shows an arrangement for acquiring context information in a network according to a fifth embodiment of the present invention. Figure 8 shows a further development of the present invention as described with respect to Figure 7. According to this further development, intermediate context information 322 is transmitted to the receiving network entity 4 to effect the derivation of receiving context information 422 based on this intermediate context information 322. This receiving context information 422 is then provided to a service application 5 at the receiving network entity 4.

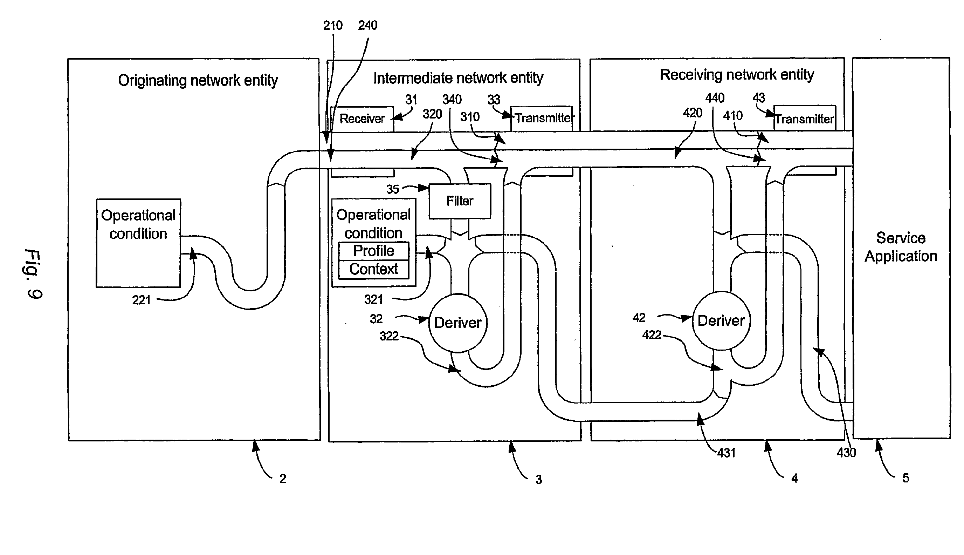

Figure 9 shows an arrangement for acquiring context information in a network according to a sixth embodiment of the present invention. As shown in figure 9, the service application 5 may comprise any process running on the receiving network entity itself, or a processor connected to the receiving network entity.

Correspondingly, the network entity the present invention may further comprise a fourth receiver adapted to receive feedback information from the receiving network entity, derived based at least on data from a service application.

The intermediate network entity may comprise a proxy unit in the network, while the originating network entity and the receiving network entity may each be one of a client, a server, or another intermediate network entity.

The terms client and server are not necessarily bound to terminal-side or network-side applications but are determined by entities requesting and providing a service (e.g. an application requesting a service from a server and with that acting as a client can, at the same time, fulfill a service requested by another client and win that acting as a server)

It may be assumed that there is information of interest available from proxies, the client, and the server. Such information may include but is not limited to data throughput, latency, network availability, usage patterns, or performance characteristics.

The present invention may thus allow for the collection of context information that is available at multiple locations in a communications network. These locations may be traversed by service specific interaction as well as supporting signal between client and server. Context selection may be based on profile information and can be further refined by feedback evaluation. In the presence of multiple communication paths, profiles, selection strategies, cached context can be propagated between participating network entities.

The present invention can be of benefit in a service-providing environment to better support the deployment of context-aware services.

The present invention allows for the collection of context information that is available at multiple locations in a communications network. These location are traversed by service specific interaction as well as supporting signaling between client and server. Context selection is based on profile information and can be further refined by feedback evaluation. In the presence of multiple communication paths, profiles, selection strategies, and cached context information can be propagated between participating network entities.

The communication path has the attribute that when a communication message is received by either one or more intermediate proxies or the actual server, context information can be added to the message and provided to the server.

To provide relevant context, context selection may be based on client, server, and proxy profiles and is further adapted through feedback information. Appropriate caching strategies prevent cached information from becoming stale.

According to one embodiment of the present invention, the originating network entity and the receiving network entity may in fact be the same network entity.

The possibility of multiple communication paths between clients and servers can cause similar context information to be computed more than once and with that unnecessarily affect performance characteristics of our communications infrastructure and the services themselves. To avoid such negative performance impact, there is a mechanism to propagate valid cached information to synchronize network entities that are in an alternative path.

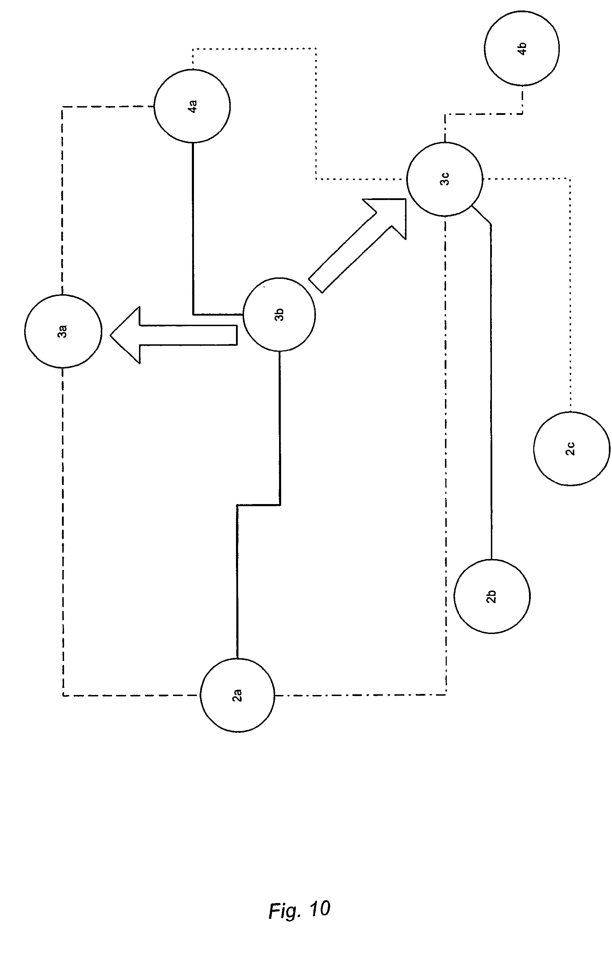

Figure 10 shows an arrangement for acquiring context information in a network according to a seventh embodiment of the present invention.

This network comprises a plurality of originating network entities 2a, 2b and 2c and a plurality of receiving network entities 4a and 4b, and a plurality of intermediate network entities 3a, 3b and 3c. These network entities are connected together by a network of connections, so that alternative paths exist between any given pair of originating network entity 2, and receiving network entity 4. For example, two paths exist between originating network entity 2a and receiving network entity 4a, i.e., via either network entity 3a, or network entity 3b. According to the present invention, information can be transmitted to a further intermediate network entity in an alternative path between the originating network entity 2 and the receiving network entity 4. For example, the intermediate network entity 3b may send such further information to the intermediate network entity 3a. This data may comprise any of the operational condition at any of the network entities from which the intermediate network entity has received information, or may comprise intermediate context information derived at the intermediate network entity itself, as discussed above. By this means, the intermediate network entity 3a benefits from the extra context information available at the network entity 3b without the need to carry out separately the steps of the present invention, that is of receiving context information from surrounding network entities, filtering this information, and using it in combination with other sets of information to derive its own intermediate context information. Alternatively, in addition to carrying out the present invention the steps of the present invention, the step of deriving the intermediate context information may further take into account information provided by other intermediate note.

If context information or selection strategies are independent either or a particular client, or of a particular service, they can be reused by multiple servers in the former case, or by multiple clients in the latter.

Thus to avoid unnecessary computation of communication, profiles, selection strategies, and context information itself are cached for further client server interactions not limited to the original pair.

If there are multiple communications paths possible, valid cached information is propagated and synchronized.

Correspondingly, the transmitter of the Network entity of the present invention may further be adapted to transmit at least one of an operational condition and intermediate context information to at least one further intermediate network entity in an alternate path between the originating network entity and receiving network entity.

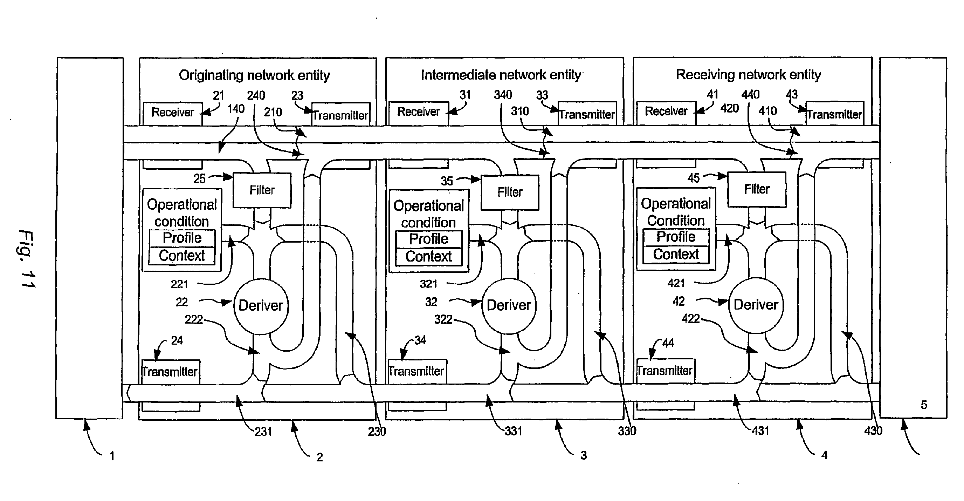

Figure 11 shows an arrangement for acquiring context information in a network according to an eighth embodiment of the present invention.

According to this embodiment there are provided a plurality of network entities each carrying out corresponding steps, and in communication with adjacent network entities. In particular, there is provided an originating network entity 2, an intermediate network entity 3 and a receiving network entity 4. Each of the network entities is able to receive information from a proceeding network entity 140, 240, 340, and to filter out relevant parts thereof at a filtering step 25, 35, and 45. Each network entity is also able to receive feedback information 231, 331, 431, from a later network entity, and to store locally information relating to an operational condition 221, 321, 421. In each case, this operational condition may comprise profile information and context information. The information filtered from that arriving from the proceeding network entity, 240, 340, the information relating to an operational condition 221, 321, 421, and the feedback information from the later network entity, 231, 321, 431 can all be used in a derivation step 22, 32, 42, in which new context information 222, 322, 422 is derived. This new context information can then be incorporated into the context information sent forward to the next operating network entity 240, 340, 440. Thus, according to this embodiment of the invention, every network entity in the network receives information from network entities both upstream and downstream thereof. In combination with the arrangements described with regard to Figure 6, this means that context information relating to all network entities in the network can be distributed throughout the network, so that a high degree of optimization is possible throughout the network. This optimization may be found in for example the distribution of processing tasks throughout elements of network, the attribution of different activities to network entities having appropriate functionality, the improved distribution of network traffic, and reducing bottle-necks, etc.

Thus figure 11 illustrates a sample signaling or communication path between client and server according to an embodiment. Here, a proxy or intermediate network entity 3 is traversed by the request/response messages. The proxy adds context information to the request initiated by the client. Context information is selected due to client, server or proxy profiles. Each proxy maintains a cache with profile information that has been accessed or propagated before. In addition to that, the cache contains a context selection strategy that is constantly adjusted as well as context information already obtained or derived.

It is also shown that feedback is sent in the response message and evaluated by the proxies.

According to a further embodiment, Adaptive Context Accumulation is performed between a Client and a Server. This involves the collection of context information that is available along the signaling & data path between client and server. Context selection strategies are applied to select relevant information, whereby the relevance of a given set of data may be based on profile information, feedback etc.

Different types of context information may include User profiles, service profiles, Network capabilities, Network status, Computational resources or Non-computational information such as time or location.

In implementing collection of context information along the path between client and server, issues such as the acquiring of relevant context information, context heterogeneity and context overflow, and the trade-Off between effort to acquire context information and information relevance must be considered.

Context information may thus be collected from network entities between client and server of an application that are traversed by Signaling messages, service specific interaction or content. The application may be context-aware and thereby benefit from available information.

Network entities on the communication path, which may be proxies, can add context information to the messages.

It may be desirable to adopt a strategy adapted to minimize the amount of information to be handled. This may involve selection based on profiles provided by client, the server or located in the intermediate network entity.

Feedback propagated from server to clients via intermediate network entities. Intermediate network entities may delete non-relevant information such as that added by other intermediate network entities.

Caching of selection strategies, Profiles, Feedback, Relevant context, may be desirable. Caching In the intermediate network entities would make the information available for further processing. Where this is implemented, clean-up mechanisms may be provided to avoid stale caches.

Context information may be provided without active client and server participation. Client or server may provide profiles and feedback. Application providers can introduce context-aware applications by using the described infrastructure-based mechanisms. Multiple communication paths may be addressed by propagation of cached information.

Adaptive Context Accumulation between a Client and a Server

According to a further embodiment, the steps of generating profile information on the originating network entity based on the originating context information; and generating profile information on the receiving network entity based on the receiving context information may be carried out.

It is noted that a program or programs may be provided having instructions adapted to cause a data processing device or a network of data processing devices to realize elements of the above embodiments and to carry out the method of at least one of the above operations.

Also, a computer-readable medium may be provided having a program embodied thereon, where the program is to make a computer or a system of data processing devices to execute functions or operations of the features and elements of the above-described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The computer-readable medium may be constituted by the data stream for the data structure. Still further, a computer program product may be provided comprising the computer-readable medium.

According to another embodiment a network entity for use in a communication network comprises: a first receiver adapted to receive originating context information specifying an operational condition at an originating network entity and a message from the originating network entity, the originating context information and the message being associated with one another and; a processor, adapted to derive intermediate context information at the intermediate network entity based on the originating context information received from the originating network entity by said first receiver and an operational condition at the intermediate network entity; and a transmitter, adapted to transmit the intermediate context information in association with a message to a receiving network entity.

The processor may be adapted to derive the intermediate context information by modifying the originating context information based on the operational condition at the intermediate network entity.

Further, the processor may be adapted to derive the intermediate context information by, deleting at least a part of the originating context information; transforming at least a part of the originating context information; or adding context information.

Further, a second receiver may be provided to receive feedback information from the receiving network entity, and the processor may be further adapted to derive the intermediate context information based thereon.

The network entity may further comprise a third receiver adapted to receive further originating context information, and the processor may be adapted to derive the intermediate context information based thereon.

The network entity may further comprise selection means adapted to define selection rules based on at least one of the operational conditions at the originating network entity, the intermediate network entity and the receiving network entity, and to filter the originating context information based on the selection rules.

The operational condition may specify at least one of static information and dynamic information at a network entity.

The network entity may further comprise one of, a memory adapted to store a predefined operational condition, a communicator adapted to obtain an operational condition from a device in communication with a network entity, and further processor means adapted to derive an operational condition from information available at a network entity.

The originating context information may constitute part of the message from the originating network entity.

The network entity may further comprise an intermediate context information cache adapted to store said intermediate context information; a selection rules cache adapted to store said selection rules; an originating context information cache adapted to store said originating context information received by said first receiver; a received context information cache to store said context information received by said second receiver; a feedback information cache; operational conditions at the originating network entity; operational conditions at the intermediate network entity and operational conditions at the receiving network entity.

The network entity may further comprise a fourth receiver adapted to receive feedback information from the receiving network entity, derived based at least on data from a service application.

The network entity may be a proxy unit.

Further, the originating network entity and the receiving network entity each may be one of a client, a server and an intermediate network entity.

Still further, the originating network entity and the receiving network entity may be the same network entity.

Finally, the transmitter may be further adapted to transmit at least one of an operational condition and intermediate context information to at least one further intermediate network entity in an alternate path between the originating network entity and receiving network entity.

## Claims

1. Method of acquiring context information at an intermediate network entity of a communication network (3), including
receiving originating context information (240) from an originating network entity (2), the originating context information (240) being associated with a message (210) from the originating network entity (2) transmitted along a communication path and specifying an operational condition (221) at the originating network entity (2);
deriving intermediate context information (322) at the intermediate network entity (3) based on the originating context information (240) received from the originating network entity (2) and an operational condition (321) at the intermediate network entity (3) by modifying the originating context information (240) based on the operational condition at the intermediate network entity (321);
transmitting the intermediate context information (322) in association with a message (310) to a receiving network entity (4) along the communication path; and
wherein deriving intermediate context information (322) at the intermediate network entity (3) is further based on feedback information (431) obtained from the receiving network entity; and
including transmitting at least one of an operational condition (221, 321, 421) and intermediate context information (322) to at least one further intermediate network entity in an alternate path between the originating network entity (2) and the receiving network entity (4).

2. Method of claim 1, wherein the modifying step includes at least one of deleting at least a part of the originating context information (240); transforming at least a part of the originating context information (240); and adding context information.

3. Method of at least one of the preceding claims, including receiving further originating context information and deriving the intermediate context information based thereon.

4. Method of at least one of the preceding claims, including defining selection rules based on at least one of the operational conditions (221, 321, 421) at the originating network entity (2), the intermediate network entity (3) and the receiving network entity (4) and filtering the originating context information (221, 321, 421) based on the selection rules.

5. Method of at least one of the preceding claims, wherein the operational condition (221, 321, 421) specifies at least one of static information and dynamic information at a network entity (2, 3, 4).

6. Method of at least one of the preceding claims, wherein the operational condition (221, 321, 421) may be one of prespecified, obtained from a device in communication with a network entity (2, 3, 4), and derived from information available at a network entity (2, 3, 4).

7. Method of at least one of the preceding claims, wherein the originating context information constitutes part of the message from the originating network entity (content agnostic client).

8. Method of at least one of the preceding claims, including caching at least one of:
- intermediate context information;
- selection rules;
- originating context information;
- receiving context information; and
- feedback information.
- operational conditions at the originating network entity;
- operational conditions at the intermediate network entity;
- operational conditions at the receiving network entity.

9. Method of at least one of the preceding claims, including transmitting the intermediate context information (322) to the receiving network entity (4) to effect deriving of receiving context information (422) based on the intermediate context information (322) and provision of the receiving context information (422) to a service application (5) at the receiving network entity (4).

10. Method of at least one of the preceding claims, including receiving feedback information (431) from the receiving network entity (4), derived based at least on data from a service application (5).

11. Method of at least one of the preceding claims, wherein the intermediate network entity (3) is a proxy unit.

12. Method of at least one of the preceding claims, wherein the originating network entity (2) and the receiving network entity (4) each are one of a client, a server and another intermediate network entity.

13. Method of at least one of the preceding claims, wherein the originating network unit (2) and the receiving network entity (4) are the same network entity (4).

14. A network entity for use in a communication network, comprising:
a first receiver adapted to receive originating context information specifying an operational condition at an originating network entity and a message from the originating network entity transmitted along a communication path, the originating context information and the message being associated with one another and;
a processor, adapted to derive intermediate context information at the intermediate network entity based on the originating context information received from the originating network entity by said first receiver and an operational condition at the intermediate network entity by modifying the originating context information based on the operational condition at the intermediate network entity;
a transmitter, adapted to transmit the intermediate context information in association with a message to a receiving network entity along the communication path;
a second receiver adapted to receive feedback information from the receiving network entity, and wherein said processor is further adapted to derive the intermediate context information based thereon; and
wherein said transmitter is further adapted to transmit at least one of an operational condition and intermediate context information to at least one further intermediate network entity in an alternate path between the originating network entity and receiving network entity.

15. A program having instructions adapted to carry out the method of any one of claims 1 to 13.

16. A computer readable medium, in which a program is embodied, wherein the program is to make a data processing device execute the method of any one of claims 1 to 13.

17. A computer program product comprising the computer readable medium of claim 16.

## Patentansprüche

1. Verfahren zum Erlangen von Kontextinformation an einer Zwischen-Netzwerkeinheit eines Kommunikationsnetzwerks (3), beinhaltend
Empfangen von Ursprungs-Kontextinformation (240) von einer Ursprungs-Netzwerkeinheit (2), wobei die Ursprungs-Kontextinformation (240) mit einer Nachricht (210) von der Ursprungs-Netzwerkeinheit (2) verbunden ist, die entlang eines Kommunikationspfades gesendet wird und eine Betriebsbedingung (221) an der Ursprungs-Netzwerkeinheit (2) spezifiziert;
Ableiten von Zwischen-Kontextinformation (322) an der Zwischen-Netzwerkeinheit (3) basierend auf der von der Ursprungs-Netzwerkeinheit (2) empfangenen Ursprungs-Kontextinformation (240) und einer Betriebsbedingung (321) an der Zwischen-Netzwerkeinheit (3) durch Modifizieren der Ursprungs-Kontextinformation (240), basierend auf der Betriebsbedingung an der Zwischen-Netzwerkeinheit (321);
Senden der Zwischen-Kontextinformation (322) in Verbindung mit einer Nachricht (310) an eine Empfangsnetzwerkeinheit (4) entlang des Kommunikationspfades, und
wobei Ableiten einer Zwischen-Kontextinformation (322) an der Zwischen-Netzwerkeinheit (3) weiterhin auf Rückmeldungsinformation (431) basiert, die von der Empfangsnetzwerkeinheit erhalten wird; und
beinhaltend Senden einer Betriebsbedingung (221, 321, 421) und/oder einer Zwischen-Kontextinformation (322) an wenigstens eine weitere Zwischen-Netzwerkeinheit auf einem anderen Pfad zwischen der Ursprungs-Netzwerkeinheit (2) und der Empfangsnetzwerkeinheit (4).

2. Verfahren nach Anspruch 1, wobei der Modifizierungsschritt beinhaltet Löschen wenigstens eines Teils der Ursprungs-Kontextinformation (240) und/oder Umwandeln wenigstens eines Teils der Ursprungs-Kontextinformation (240) und/oder Hinzufügen von Kontextinformation.

3. Verfahren nach wenigstens einem der vorhergehenden Ansprüche, beinhaltend Empfangen weiterer Ursprungs-Kontextinformation und Ableiten von Zwischen-Kontextinformation basierend darauf.

4. Verfahren nach wenigstens einem der vorhergehenden Ansprüche, beinhaltend Definieren von Auswahlregeln basierend auf wenigstens einer der Betriebsbedingungen (221, 321, 421) an der Ursprungs-Netzwerkeinheit (2), der Zwischen-Netzwerkeinheit (3) und der Empfangsnetzwerkeinheit (4) und Filtern der Ursprungs-Kontextinformation (221, 321, 421) basierend auf den Auswahlregeln.

5. Verfahren nach wenigstens einem der vorhergehenden Ansprüche, wobei die Betriebsbedingung (221, 321, 421) eine statische Information und/oder eine dynamische Information an der Netzwerkeinheit (2, 3, 4) spezifiziert.

6. Verfahren nach wenigstens einem der vorhergehenden Ansprüche, wobei die Betriebsbedingung (221, 321, 421) vorspezifiziert und/oder von einem Gerät in Kommunikation mit einer Netzwerkeinheit (2, 3, 4) erhalten und/oder von an einer Netzwerkeinheit (2, 3, 4) verfügbaren Information abgeleitet werden kann.

7. Verfahren nach wenigstens einem der vorhergehenden Ansprüche, wobei die Ursprungs-Kontextinformation einen Teil der Nachricht von der Ursprungs-Netzwerkeinheit (Inhaltsagnostik-Client) bildet.

8. Verfahren nach wenigstens einem der vorhergehenden Ansprüche, beinhaltend Caching wenigstens eines von:
- Zwischen-Kontextinformation;
- Auswahlregeln;
- Ursprungs-Kontextinformation;
- Empfangskontextinformation; und
- Rückmeldungsinformation.
- Betriebsbedingungen an der Ursprungs-Netzwerkeinheit;
- Betriebsbedingungen an der Zwischen-Netzwerkeinheit;
- Betriebsbedingungen an der Empfangsnetzwerkseinheit.

9. Verfahren nach wenigstens einem der vorhergehenden Ansprüche, beinhaltend Übertragen der Zwischen-Kontextinformation (322) an die Empfangsnetzwerkseinheit (4), um Ableiten von Empfangskontextinformation (422) basierend auf der Zwischen-Kontextinformation (322) zu beeinflussen und Bereitstellen der Empfangskontextinformation (422) an eine Dienstanwendung (5) an der Empfangsnetzwerkseinheit (4).

10. Verfahren nach wenigstens einem der vorhergehenden Ansprüche, beinhaltend Empfangen von Rückmeldungsinformation (431) von der Empfangsnetzwerkeinheit (4), die basierend auf wenigstens Daten von einer Dienstanwendung (5) abgeleitet wird.

11. Verfahren nach wenigstens einem der vorhergehenden Ansprüche, wobei die Zwischen-Netzwerkeinheit (3) eine Proxy-Einheit ist.

12. Verfahren nach wenigstens einem der vorhergehenden Ansprüche, wobei die Ursprungs-Netzwerkeinheit (2) und die Empfangsnetzwerkeinheit (4) jeweils ein Client, ein Server oder eine andere Zwischen-Netzwerkeinheit sind.

13. Verfahren nach wenigstens einem der vorhergehenden Ansprüche, wobei die Ursprungs-Netzwerkeinheit (2) und die Empfangs-Netzwerkeinheit (4) die gleiche Netzwerkeinheit (4) sind.

14. Netzwerkeinheit zur Verwendung in einem Kommunikationsnetzwerk, umfassend:
einen ersten Empfänger, der eingerichtet ist, Ursprungs-Kontextinformation, die eine Betriebsbedingung spezifiziert, an einer Ursprungs-Netzwerkeinheit und eine Nachricht von der Ursprungs-Netzwerkeinheit zu empfangen, die entlang eines Kommunikationspfades gesendet wird, wobei die Ursprungs-Kontextinformation und die Nachricht miteinander verbunden sind und;
ein Prozessor, der eingerichtet ist, Zwischen-Kontextinformation an der Zwischen-Netzwerkeinheit basierend auf der Ursprungs-Kontextinformation, die von der Ursprungs-Netzwerkeinheit durch den ersten Empfänger empfangen wird, und einer Betriebsbedingung an der Zwischen-Netzwerkeinheit abzuleiten durch Modifizieren der Ursprungs-Netzwerkinformation basierend auf der Betriebsbedingung an der Zwischen-Netzwerkeinheit;
ein Sender, der eingerichtet ist, die Zwischen-Kontextinformation in Verbindung mit einer Nachricht an eine Empfangsnetzwerkeinheit entlang des Kommunikationspfades zu senden;
ein zweiter Empfänger, der eingerichtet ist, Rückmeldungsinformation von der Empfangsnetzwerkeinheit zu empfangen, und wobei der Prozessor weiterhin eingerichtet ist, die Zwischen-Kontextinformation basierend darauf abzuleiten; und
wobei der Sender weiterhin eingerichtet ist, die Betriebsbedingung und/oder eine Zwischen-Kontextinformation an wenigstens eine weitere Zwischen-Netzwerkeinheit auf einem anderen Pfad zwischen der Ursprungs-Netzwerkeinheit und der Empfangsnetzwerkeinheit zu senden.

15. Ein Programm mit Befehlen, eingerichtet zum Ausführen des Verfahrens nach einem der Ansprüche 1 bis 13.

16. Ein computerlesbares Medium, in dem ein Programm ausgebildet ist, wobei das Programm ein Datenverarbeitungsgerät veranlasst, das Verfahren nach einem der Ansprüche 1 bis 13 auszuführen.

17. Ein Computerprogrammprodukt, das das computerlesbare Medium nach Anspruch 16 umfasst.

## Revendications

1. Procédé d'acquisition d'informations de contexte au niveau d'une entité de réseau intermédiaire d'un réseau de communication (3), incluant
la réception d'informations de contexte de départ (240) en provenance d'une entité de réseau de départ (2), les informations de contexte de départ (240) étant associées à un message (210) en provenance de l'entité de réseau de départ (2) transmises le long d'un chemin de communication et spécifiant un état opérationnel (221) au niveau de l'entité de réseau de départ (2) ;
l'obtention d'informations de contexte intermédiaires (322) au niveau de l'entité de réseau intermédiaire (3) sur base des informations de contexte de départ (240) reçues en provenance de l'entité de réseau de départ (2) et d'un état opérationnel (321) au niveau de l'entité de réseau intermédiaire (3) en modifiant les informations de contexte de départ (240) sur base de l'état opérationnel au niveau de l'entité de réseau intermédiaire (321) ;
la transmission des informations de contexte intermédiaires (322) en association avec un message (310) à une entité de réseau de réception (4) le long du chemin de communication ; et
dans lequel l'obtention d'informations de contexte intermédiaires (322) au niveau de l'entité de réseau intermédiaire (3) est en outre basée sur des informations de rétroaction (431) obtenues en provenance de l'entité de réseau de réception ; et
incluant la transmission d'au moins l'un d'un état opérationnel (221, 321, 421) et d'informations de contexte intermédiaires (322) à au moins une entité de réseau intermédiaire supplémentaire dans une variante de chemin entre l'entité de réseau de départ (2) et l'entité de réseau de réception (4).

2. Procédé selon la revendication 1, dans lequel l'étape de modification inclut au moins l'une de la suppression d'au moins une partie des informations de contexte de départ (240) ; la transformation d'au moins une partie des informations de contexte de départ (240) ; et l'ajout d'informations de contexte.

3. Procédé selon au moins une des revendications précédentes, incluant la réception d'informations de contexte de départ supplémentaires et l'obtention d'informations de contexte intermédiaires sur base de celles-ci.

4. Procédé selon au moins une des revendications précédentes, incluant la définition de règles de sélection sur base d'au moins un des états opérationnels (221, 321, 421) au niveau de l'entité de réseau de départ (2), de l'entité de réseau intermédiaire (3) et de l'entité de réseau de réception (4) et le filtrage des informations de contexte de départ (221, 321, 421) sur base des règles de sélection.

5. Procédé selon au moins une des revendications précédentes, dans lequel l'état opérationnel (221, 321, 421) spécifie au moins l'une d'informations dynamiques et d'informations statiques au niveau d'une entité de réseau (2, 3, 4).

6. Procédé selon au moins une des revendications précédentes, dans lequel l'état opérationnel (221, 321, 421) peut être l'un d'un état spécifié à l'avance, obtenu à partir d'un dispositif en communication avec une entité de réseau (2, 3, 4), et obtenu à partir d'informations disponibles au niveau d'une entité de réseau (2, 3, 4).

7. Procédé selon au moins une des revendications précédentes, dans lequel les informations de contexte de départ constituent une partie du message en provenance de l'entité de réseau de départ (client indépendant du contenu).

8. Procédé selon au moins une des revendications précédentes, incluant la mise en cache d'au moins un :
- d'informations de contexte intermédiaires ;
- de règles de sélection ;
- d'informations de contexte de départ ;
- d'informations de contexte de réception ; et
- d'informations de rétroaction.
- d'états opérationnels au niveau de l'entité de réseau de départ ;
- d'états opérationnels au niveau de l'entité de réseau intermédiaire ;
- d'états opérationnels au niveau de l'entité de réseau de réception.

9. Procédé selon au moins une des revendications précédentes, incluant la transmission des informations de contexte intermédiaires (322) à l'entité de réseau de réception (4) pour effectuer l'obtention d'informations de contexte de réception (422) sur base des informations de contexte intermédiaires (322) et la fourniture des informations de contexte de réception (422) à une application de service (5) au niveau de l'entité de réseau de réception (4).

10. Procédé selon au moins une des revendications précédentes, incluant la réception d'informations de rétroaction (431) en provenance de l'entité de réseau de réception (4), obtenues sur base d'au moins de données en provenance d'une application de service (5).

11. Procédé selon au moins une des revendications précédentes, dans lequel l'entité de réseau intermédiaire (3) est une unité mandataire.

12. Procédé selon au moins une des revendications précédentes, dans lequel l'entité de réseau de départ (2) et l'entité de réseau de réception (4) sont chacune l'un d'un client, d'un serveur et d'une autre entité de réseau intermédiaire.

13. Procédé selon au moins une des revendications précédentes, dans lequel l'unité de réseau de départ (2) et l'entité de réseau de réception (4) sont la même entité de réseau (4).

14. Entité de réseau à utiliser dans un réseau de communication, comprenant :
un premier récepteur conçu pour recevoir des informations de contexte de départ spécifiant un état opérationnel au niveau d'une entité de réseau de départ et un message en provenance de l'entité de réseau de départ transmis le long d'un chemin de communication, les informations de contexte de départ et le message étant associés les uns aux autres, et ;
un processeur, conçu pour obtenir des informations de contexte intermédiaires au niveau de l'entité de réseau intermédiaire sur base des informations de contexte de départ reçues en provenance de l'entité de réseau de départ par ledit premier récepteur et un état opérationnel au niveau de l'entité de réseau intermédiaire en modifiant les informations de contexte de départ sur base de l'état opérationnel au niveau de l'entité de réseau intermédiaire ;
un émetteur, conçu pour transmettre les informations de contexte intermédiaires en association avec un message à une entité de réseau de réception le long du chemin de communication ;
un second récepteur conçu pour recevoir des informations de rétroaction en provenance de l'entité de réseau de réception, et dans lequel ledit processeur est en outre conçu pour obtenir les informations de contexte intermédiaires sur base de celles-ci ; et
dans lequel ledit émetteur est en outre conçu pour transmettre au moins l'un d'un état opérationnel et des informations de contexte intermédiaires à au moins une entité de réseau intermédiaire supplémentaire dans une variante de chemin entre l'entité de réseau de départ et l'entité de réseau de réception.

15. Programme ayant des instructions conçues pour exécuter le procédé selon l'une quelconque des revendications 1 à 13.

16. Support lisible par ordinateur, dans lequel un programme est intégré, dans lequel le programme fait en sorte qu'un dispositif de traitement de données exécute le procédé selon l'une quelconque des revendications 1 à 13.

17. Produit formant programme informatique comprenant le support lisible par ordinateur selon la revendication 16.
